# EUROPEAN PATENT APPLICATION

(11) **EP 3 225 550 A1**
(43) Date of publication of application: **04.10.2017**
(21) Application number: 17161552.9
(22) Date of filing: 17.03.2017
(51) Int. Cl.: B64D 11/06

(54) **SEAT**

(30) Priority: 18.03.2016 GB 201604654
(71) Applicant: Acro Aircraft Seating Limited, Crawley, West Sussex RH11 0PR (GB)
(72) Inventor: Challenor, Adam, Crawley, West Sussex RH11 0PR (GB); Hodgkinson, Alex, Crawley, West Sussex RH11 0PR (GB); Conroy, Joseph, Crawley, West Sussex RH11 0PR (GB)
(74) Representative: Sweetinburgh, Mark Roger

(57) **Abstract**

Described herein is a seat (1) which comprises a seat base, a seat back (2) and a seat frame (3). The seat back comprises a first connector (4), a second connector (5) and a securing means (6). The first and second connectors are for securing the seat back in pivotable engagement with the seat and the securing means is for controlling pivotal movement of the seat back relative to the seat and for preventing disengagement of the first and second connectors from the seat.

## Description

The present invention relates to seats, in particular to aircraft seats.

Various types of aircraft seat are known which generally comprise a seat base, a seat back and one or more armrests. In order to satisfy airline requirements, it is beneficial to make aircraft seats lighter and to minimise the space that they occupy on an aircraft.

In addition, aircraft seats are often difficult to assemble and disassemble with the provision of multiple bolts and screws required in order to securely attach the various components together. This can be particularly problematic when the seat back of a seat requires repair or replacement. Such repair or replacement will often require removal or replacement of the entire seat since removal of the seatback is either not possible or very difficult.

It is, therefore, an object of the present invention to seek to alleviate the above identified problems.

### SUMMARY OF THE INVENTION

According to one aspect of the present invention, there is provided a seat, the seat comprising a seat base, a seat back and a seat frame, wherein the seat back comprises a first connector, a second connector and a securing means, wherein the first and second connectors are for securing the seat back in pivotable engagement with the seat and the securing means is for controlling pivotal movement of the seat back relative to the seat and for preventing disengagement of the first and second connectors from the seat.

Preferably, the seat back is moveable between a first position and a second position, the securing means is for securing the seat back in the first position and one or both of said first and second connectors are shaped for preventing removal of the seat back from the seat when the seat back is in the first position and allowing removal of the seat back from the seat when the seat back is in the second position.

Remarkably, the present invention provides a seat with a seat back that can be easily installed and removed. During installation, the seat back is positioned in the correct orientation and then moved into engagement with the seat, for example the frame or the seat base, via the connectors. The securing means is then used to secure the seat back in position, preventing disengagement of the connectors to control pivoting of the seat back relative to the frame or seat base. For example, in one embodiment described below, the securing means comprises a third connector for connection to the seat base, the frame or a recline mechanism of the seat.

Preferably, the securing means is for preventing pivotal movement of the seat back relative to the frame or the seat base.

Preferably, the securing means comprises a recline mechanism.

In embodiments wherein the securing means comprises a third connector for connection to a recline mechanism, it will be appreciated that the recline mechanism is used to alter the pivotal position of the seat back about the first and second connectors relative to the frame or seat base, and thus recline or alternatively straighten the seat back relative to the seat base. That is, when the seat back is straightened relative to the seat base, the seat back is returned to an upright position.

In embodiments wherein a recline mechanism is not provided, the third connector is for preventing pivotal movement of the seat back relative to the frame or seat base.

In the event that the seat back requires removal or replacement, the securing means is released which allows the seat back to be moved, for example raised, and for the first and second connectors to disengage from the seat, for example the frame or seat base, and for the seat back to be removed.

Remarkably, the present invention also provides a seat back that can be pivoted forward to improve access to rear parts of the seat back, seat base and/or frame. In this way, release of the securing means permits forward pivotal movement of the seat back to a maintenance position.

As such, in one embodiment of the invention, it is preferred that the seat back is moveable between a seating position and a maintenance position.

Preferably, the first and second connectors are positioned on either side of the seat back
Preferably, the first and second connectors are for engagement with one or more mating parts on the frame or seat base, preferably the frame.

Preferably, the first and second connectors each comprise a first mating part for engagement with a second mating part on the frame or seat base, preferably the frame.

Preferably, the first mating part is a female mating part and the second mating part is a male mating part. Alternatively, the first mating part is a male mating part and the second mating part is a female mating part.

Preferably, the female mating parts comprise one or more channels for engagement with a male mating part.

Preferably, the male mating parts each comprise one or more bars or protrusions for engagement with a female mating part.

Preferably, the one or more protrusions comprise one or more pins.

Preferably, the one or more protrusions comprise one or more pivot pins.

Preferably, the female mating parts each comprise an insert for positioning within the seat back, seat base or frame.

As such, the female mating parts preferably comprise a seat back insert, seat base insert or frame insert, for engagement with a male mating part. Put another way, it is preferred that the female mating parts take the form of an insert for positioning within the seat back, seat base or frame.

Preferably, the inserts are positioned within recesses in the seat back, seat base or the frame.

Preferably, the one or more channels comprise an L-shaped channel.

Preferably, the one or more channels comprise an entrance toward or at the front of the seat back or the frame. Alternatively, the one or more channels comprise an entrance toward or at the rear of the seat back, seat base or the frame.

The "front" of the seat or seat back is understood to correspond to the position of a person sitting on the seat. For example, with reference to the front of the seat back this is understood to be the face on which a person would rest their back in use.

Preferably, the one or more channels are positioned along the side of the seat back from a lower position comprising an entrance toward or at the front of the seat back, toward a stop position toward the top of the seat back.

Alternatively, the one or more channels are positioned along the side of the seat back or seat base, preferably the seat back, from a lower position comprising an entrance toward or at the rear of the seat back or seat base, preferably the seat back, toward a stop position toward the top of the seat back or seat base, preferably the seat back.

Preferably, the one or more channels along the side of an upright of the frame from an upper position comprising an entrance toward or at the front of the upright of the frame toward a stop position toward the bottom of the upright of the frame.

Alternatively, the one or more channels are positioned along the side of an upright of the frame from an upper position comprising an entrance toward or at the rear of the upright of the frame toward a stop position toward the bottom of the upright of the frame.

Preferably, the first and/or second mating parts comprise a retainer for preventing disengagement of the first and second mating parts.

Preferably, one or more female mating parts comprise a removable retainer for preventing disengagement of a male mating part from said female mating part.

Preferably, the removable retainer is a retaining insert for preventing exit of a male mating part from the female mating part.

Preferably, the retainer is a "snap fit" retaining insert.

Preferably, the retaining insert is for positioning at the entrance to the channel.

Preferably, the retaining insert is a plug.

Preferably, the one or more channels comprise a removable retaining insert for preventing exit of a male mating part from the channel.

Preferably, the female mating part comprises a bearing insert for rotatable engagement with a male mating part.

Preferably, the one or more channels comprise a bearing insert for rotatable engagement with the one or more protrusions.

Preferably, the bearing insert comprises a low-friction surface.

Preferably, the bearing insert is positioned within the female part, for example within the one or more channels.

Preferably, the female part is removable from the seat.

Preferably, the female part comprises a bearing block.

Preferably, the female part is provided in a recess of the seat back.

Preferably, one or more of the mating parts are shaped for preventing disengagement thereof from another mating part in a lateral direction when the mating parts are connected. In this respect, it will be appreciated that a "lateral direction" means in a sideways direction away from the seat.

Preferably, one or more of the mating parts comprises a bar or a protrusion and one or both of the mating parts are shaped for preventing disengagement thereof from another mating part in an axial direction when the mating parts are connected.

Preferably, the male mating parts each comprise a ball for engagement with a female part.

Preferably, the male parts each comprise a bulbous end for engagement with a female part.

Preferably, the male parts are tapered from a first diameter to a reduced diameter adjacent an engaging part for engagement with a female part.

This allows the seat back to be easily aligned with the mating parts during installation to the frame. In particular, this ensures that the seat back sits centrally between two upwardly projecting arms of the frame.

Preferably, the engaging part comprises a bulbous end.

Preferably, the engaging part comprises a ball.

Preferably, the seat, preferably the frame, comprises a mating part for engagement with two seat backs positioned side by side.

Preferably, one or more of said mating parts are provided in upwardly projecting arms of the frame.

Preferably, the securing means comprises a third connector for connection to the frame, seat base or a recline mechanism.

Preferably, the third connector comprises a first mating part for engagement with a second mating part on the frame, seat base or a recline mechanism

Preferably, the first mating part is a female mating part and the second mating part is a male mating part. Alternatively, the first mating part is a male mating part and the second mating part is a female mating part.

Preferably, the frame comprises a mating part for engagement with the third connector.

Preferably, the securing means is a releasable securing means.

Preferably, the third connector is releasably securable to the frame, seat base or a recline mechanism.

Preferably, the third connector is releasably securable to the frame, seat base or a recline mechanism by a removable bolt or screw.

Preferably, the securing means is provided toward or at the base of the seat back.

Preferably, the securing means is centrally positioned on the seat back.

Preferably, the width of the seat back tapers from a first width between the first and second connectors towards a second width at the securing means.

Preferably, the lower part of the seat back is curved towards the base of the seat back.

Preferably, the lower part of the seat back is substantially semi-circular.

This is particularly advantageous because it allows for increased leg room either side of the lower part of the seat back for a passenger sitting in a seat behind. In addition, due to the central location of the third connector, the seat is non-handed; i.e. the seat is not limited to either right-hand or left-hand use. As a result, an actuator for the recline mechanism can be provided centrally under the front edge of the seat base.

Preferably, the seat comprises a centrally positioned recline mechanism.

Preferably, the seat is a vehicle seat, preferably an aircraft seat.

According to another aspect of the present invention, there is provided a seat, the seat comprising a seat base, a seat back and a seat frame, wherein the seat back comprises a first connector, a second connector and a securing means, wherein the first and second connectors are for securing the seat back in pivotable engagement with the frame and the securing means is for controlling pivotal movement of the seat back relative to the frame and for preventing disengagement of the first and second connectors from the frame.

Preferably, the seat back is moveable between a first position and a second position, the securing means is for securing the seat back in the first position and one or both of said first and second connectors are shaped for preventing removal of the seat back from the frame when the seat back is in the first position and allowing removal of the seat back from the frame when the seat back is in the second position.

According to another aspect of the present invention, there is provided a seat back as described herein.

Preferably, the seat back comprises first, second and third connectors for connecting the seat back to a seat, wherein the first and second connectors are for securing the seat back in pivotable engagement with a seat and the third connector forms part of a securing means for controlling pivotable movement of the seat back and for preventing disengagement of the first and second connectors from a seat when connected thereto.

According to a further aspect of the present invention, there is provided a row of seats comprising a plurality of seats as described herein.

Preferably, the seat or row of seats comprises an aircraft seat or seats.

In another aspect of the present invention, there is provided a female part, preferably in the form of an insert (also referred to as a bearing block) for positioning within a seat back, seat base or frame of a seat. In particularly preferred embodiment, the female part comprises a retaining insert as described herein.

It will be appreciated that reference to "one or more" includes reference to "a plurality".

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein and vice versa.

### DETAILED DESCRIPTION

Example embodiments of the present invention will now be described with reference to the accompanying figures, in which
Figure 1 shows a seat in accordance with an embodiment of the present invention;
Figure 2 shows a seat back in accordance with an embodiment of the present invention;
Figures 3A to 3E show the steps of installation of a seat back to a frame in accordance with an embodiment of the present invention; and
Figures 4A and 4B show a row of seats comprising the seat back.

The present invention relates to a seat, particularly an aircraft seat, with an easily removable seat back.

In a preferred embodiment, the invention relates to the use of an L-shaped channel in a bearing block, provided in the seatback, for engagement with a pivot pin and the use of a retention plug to prevent the pivot pin from being removed from the channel. The bearing block provides the female part of the connection with the pivot pin (i.e. the male part) and takes the form of an insert positioned within a recess in the seat back.

A bearing block is provided on each side of the seat back which enables the seat back to pivot. In addition, the L-shaped channel is such that that when the seat is attached to the frame via the securing means, and upward movement is prevented, the pivot pin is prevented from exiting the channel. This allows the seat back to be removed or installed very easily whilst simultaneously providing a secure connection to the frame.

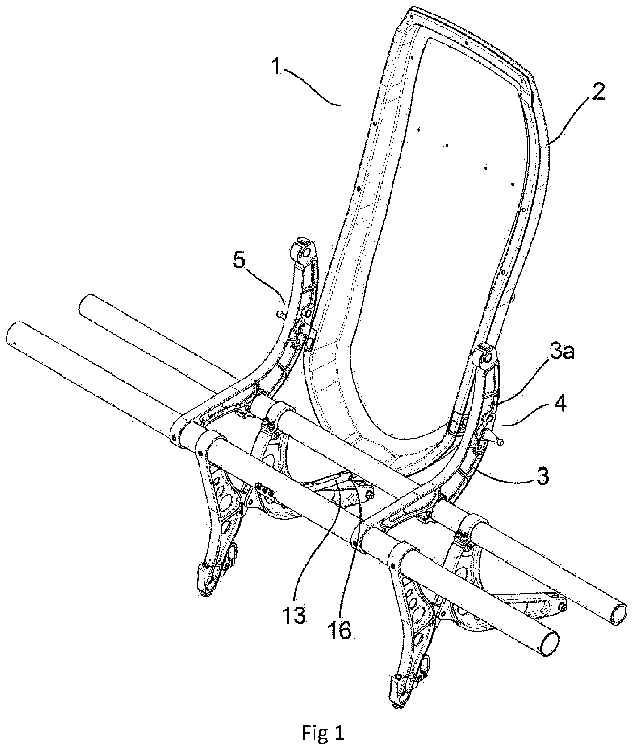

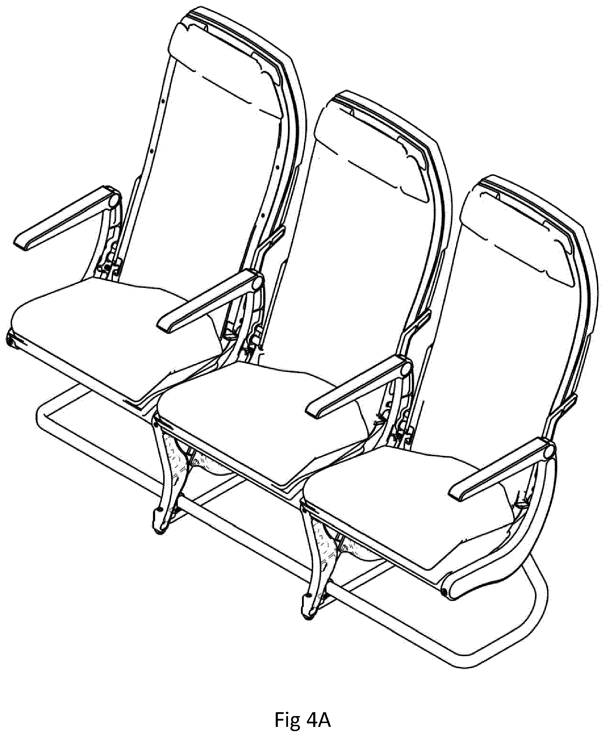

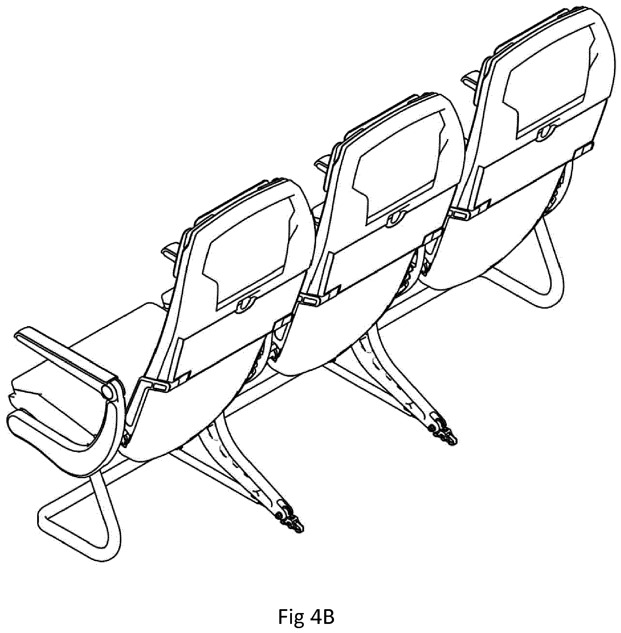

With reference to Figure 1, there is shown a seat 1 comprising a seat base (not shown), a seat back 2 and a seat frame 3. Whilst the seat base is omitted to show features of the seat back 2, it will be appreciated that, as shown in Figures 4A and 4B, the seat base is the part of the seat upon which a person would sit, with the seat back 2 supporting the back of a person.

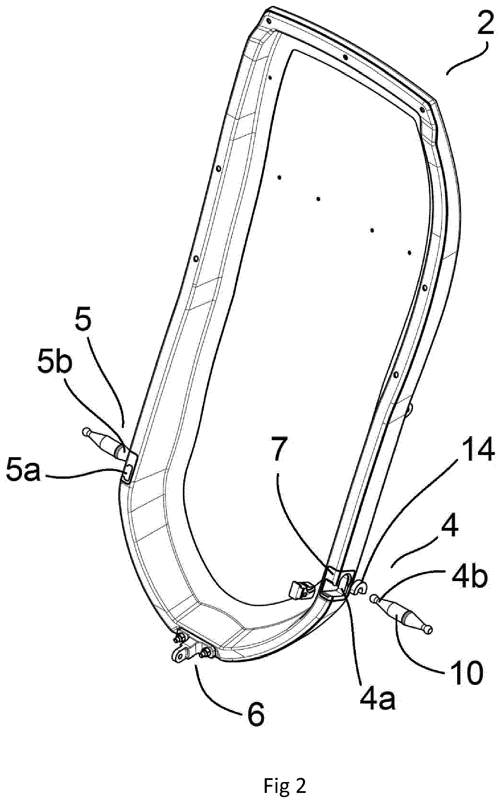

With particular reference to Figure 2, the seat back 2 comprises a first connector 4, a second connector 5 and a securing means 6 in the form of a third connector connected to a recline mechanism 13. The third connector 6 is releasably secured to the recline mechanism 13 by a removable bolt 16.

The first and second connectors 4, 5 permit the seat back 2 to pivot relative to the frame 3. When the seat back 2 is connected to the frame 3 via the third connector 6, pivotable movement of the seat back 2 is then controlled by the recline mechanism 13. Whilst a recline mechanism 13 is shown in the present embodiment, it will be appreciated that the recline mechanism 13 could be an extension of the frame 3 for preventing pivotable movement of the seat back 2 in a fixed-back, non-recline, embodiment.

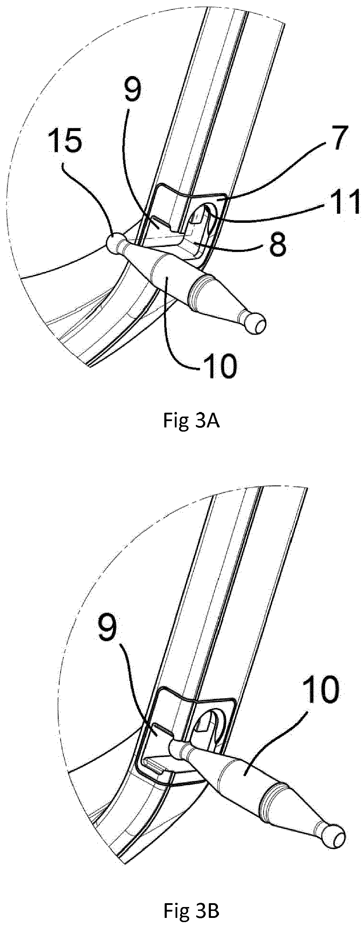

The seat back 2 is moveable between a lower first position, as shown in Figure 1 and a higher second position (not shown in Figure 1, but shown in Figures 3A and 3B). This is shown with particular reference to Figures 3A to 3E as discussed below.

The first and second connectors, 4, 5 are shaped for preventing removal of the seat back 2 from the frame 3 when the seat back 2 is in the first position and allowing removal of the seat back 2 from the frame 3 when the seat back 2 is in the second position.

The first and second connectors 4, 5 each comprise a female mating part 4a, 5a provided on the seat back 2 and a male mating part 4b, 5b provided on the frame. The female mating parts 4a, 5a comprise a bearing block (seat back insert) 7 with an L-shaped channel 8. The male mating parts comprise a pivot pin 10.

The channels 8 comprise an entrance 9 at the front of the seat back 2 which passes along the side of the seat back 2 from a lower position toward the stop 11 at the end of the channel 8 toward the top of the seat back 2.

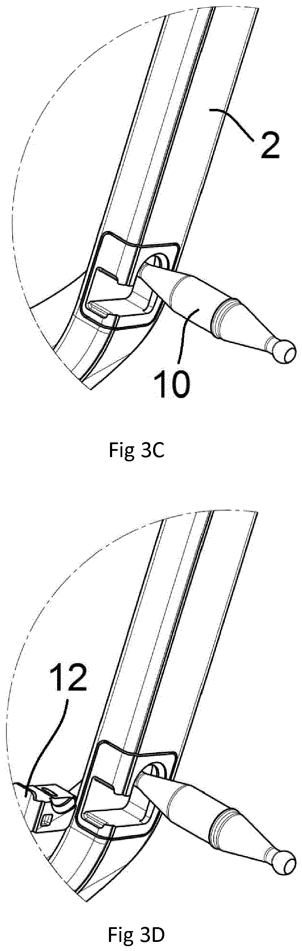

With reference to Figures 3A to 3E, installation of the seat back 2 to the frame 3 is shown in detail. As shown in Figure 3A, the seat back 2 is positioned to align the pivot pin 10 on the frame with the entrance 9 of the L-shaped channel 8 of a bearing block 7 provided within the seat back 2. The seat back 2 is then moved forward (Figure 3B) to guide the pivot pin 10 through the entrance 9 and into the lower part of the channel 8. The seat back 2 is then lowered (Figure 3C) to guide the pivot pin 10 from the lower part of the channel to the stop 11 positioned toward the top of the seat back 2 at the end of the channel 8. In the example shown, the stop 11 is formed by the end of the channel 8.

With reference to Figure 1, the third connector 6 is then connected to the recline mechanism 13. The recline mechanism 13 then allows pivotable movement of the seat back 2 relative to the frame 3.

When the third connector 6 is connected to the recline mechanism 13, upward movement of the seat back 2 is prevented, which means that the pivot pins 4a, 5a are unable to exit the channels 8. As such, the present invention provides a geometric lock for securing the seat back 2 to the frame 3.

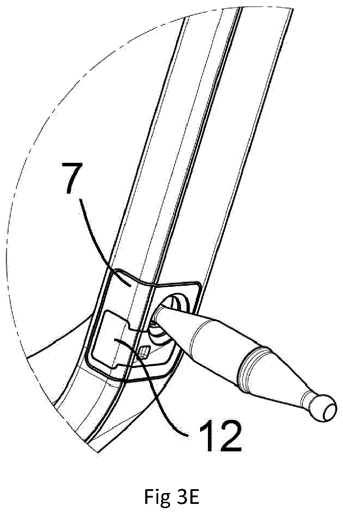

In addition to the above, a retaining insert 12, in the form of a plug, is then aligned with the channel 8 (Figure 3D) and snap-fitted to block the entrance 9 to the channel 8 and to prevent the pivot pin 10 from exiting the channel (Figure 3E). This is particularly useful during maintenance of the seat because the securing means 6 can be released and the seat back 2 is allowed to pivot on the pivot pins 10 without the seat back 2 becoming detached from the frame 3. For example, the third connector 6 can be released from the recline mechanism 13 and the seat back 2 pivoted forward from a seating position (as shown in Figure 1) to a maintenance position (not shown).

In the event that the seat back 2 requires removal or replacement, the securing means 6 is released and the retaining inserts 12 are removed. This allows the seat back 2 to be raised, then moved backward to disengage the bearing blocks 7 from the pivot pins 10. The seat back 2 can then be lifted clear of the seat 1.

As shown in Figure 2, a bearing insert 14 is provided for rotatable engagement with the pivot pin 10. This is particularly advantageous because the bearing insert 14 can provide a low friction surface and/or a protective barrier between the pivot pin 10 and the channel 8 to prevent wearing of the pivot pin 10 and channel 8.

The pivot pins 10 are provided with a bulbous end 15 for engagement with the channels 8. The channels 8 are shaped such that the pivot pins 10 are not removable in an axial direction out of the channels 8; rather, they are only removable out of the entrance 9.

In the example shown, each pivot pin 10 comprises two bulbous ends 15 for connection to seat backs 2 positioned either side of the upright 3a of the frame 3. The pivot pins 10 are also tapered towards each bulbous end 15.

As noted previously, this allows the seat back 2, and in particular the channels 8, to be easily aligned with the pivot pins 10 during installation to the frame 3.

The securing means 6 is provided at the base of the seat back 2 and is centrally positioned with respect to the width of the seat back 2. This allows the width of the seat back 2 to taper from a first width between the first and second connectors 4, 5 towards a second width at the securing means 6.

As noted above, this is particularly advantageous because it allows for increased leg room either side of the lower part of the seat back 2 for a passenger sitting in a seat behind. In addition, due to the central location of the third connector 6, the seat is non-handed; i.e. the seat is not limited to either right-hand or left-hand use. As a result, an actuator (not shown) for the centrally positioned recline mechanism 13 can be provided centrally under the front edge of the seat base (not shown).

The present invention includes the following embodiments.
1. A seat, the seat comprising a seat base, a seat back and a seat frame, wherein the seat back comprises a first connector, a second connector and a securing means, wherein the first and second connectors are for securing the seat back in pivotable engagement with the seat and the securing means is for controlling pivotal movement of the seat back relative to the seat and for preventing disengagement of the first and second connectors from the seat.
2. A seat according to embodiment 1, wherein the seat back is moveable between a first position and a second position, the securing means is for securing the seat back in the first position and one or both of said first and second connectors are shaped for preventing removal of the seat back from the seat when the seat back is in the first position and allowing removal of the seat back from the seat when the seat back is in the second position.
3. A seat according to embodiment 1 or 2, wherein the securing means is for preventing pivotal movement of the seat back relative to the frame or the seat base.
4. A seat according to any preceding embodiment, wherein the securing means comprises a recline mechanism.
5. A seat according to any preceding embodiment, wherein the first and second connectors are for engagement with one or more mating parts on the frame or seat base.
6. A seat according to any preceding embodiment, wherein the first and second connectors each comprise a first mating part for engagement with a second mating part on the frame or seat base.
7. A seat according to embodiment 6, wherein (i) the first mating part is a female mating part and the second mating part is a male mating part, or (ii) the first mating part is a male mating part and the second mating part is a female mating part.
8. A seat according to embodiment 7, wherein the female mating parts comprise one or more channels for engagement with a male mating part.
9. A seat according to embodiment 7 or 8, wherein the male mating parts each comprise one or more bars or protrusions for engagement with a female mating part.
10. A seat according to any of embodiments 7 to 9, wherein the female mating parts each comprise an insert for positioning within the seat back, seat base or frame.
11. A seat according to embodiment 10, wherein the inserts are positioned within recesses in the seat back, seat base or the frame.
12. A seat according to any of embodiments 8 to 11, wherein the one or more channels comprise an L-shaped channel.
13. A seat according to any of embodiments 6 to 12, wherein the first and/or second mating parts comprise a retainer for preventing disengagement of the first and second mating parts.
14. A seat according to any of embodiments 7 to 13, wherein the female mating part comprises a bearing insert for rotatable engagement with a male mating part.
15. A seat according to any of embodiments 7 to 14, wherein the female part comprises a bearing block.
16. A seat according to any of embodiments 6 to 15, wherein one or more of the mating parts are shaped for preventing disengagement thereof from another mating part in a lateral direction when the mating parts are connected.
17. A seat according to any of embodiments 7 to 16, wherein the male parts are tapered from a first diameter to a reduced diameter adjacent an engaging part for engagement with a female part.
18. A seat according to any of embodiments 5 to 17, wherein the seat, preferably the frame, comprises a mating part for engagement with two seat backs positioned side by side.
19. A seat according to any preceding embodiment, wherein the securing means comprises a third connector for connection to the frame, seat base or a recline mechanism.
20. A seat according to any preceding embodiment, wherein the securing means is a releasable securing means.
21. A seat according to any preceding embodiment, wherein the securing means is provided toward or at the base of the seat back.
22. A seat according to any preceding embodiment, wherein the securing means is centrally positioned on the seat back.
23. A seat according to any preceding embodiment, wherein the width of the seat back tapers from a first width between the first and second connectors towards a second width at the securing means.
24. A seat according to any preceding embodiment, wherein the seat is a vehicle seat, preferably an aircraft seat.
25. A seat back as described in any preceding embodiment.
26. A seat back according to embodiment 25, comprising first, second and third connectors for connecting the seat back to a seat, wherein the first and second connectors are for securing the seat back in pivotable engagement with a seat and the third connector forms part of a securing means for controlling pivotable movement of the seat back and for preventing disengagement of the first and second connectors from a seat when connected thereto.
27. A row of seats comprising a plurality of seats according to any of embodiments 1 to 24.
28. A female mating part as described in any of embodiments 8, 10 or 12 to 16.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications are covered by the appended claims.

## Claims

1. A seat, the seat comprising a seat base, a seat back and a seat frame, wherein the seat back comprises a first connector, a second connector and a securing means, wherein the first and second connectors are for securing the seat back in pivotable engagement with the seat and the securing means is for controlling pivotal movement of the seat back relative to the seat and for preventing disengagement of the first and second connectors from the seat.

2. A seat according to claim 1, wherein the seat back is moveable between a first position and a second position, the securing means is for securing the seat back in the first position and one or both of said first and second connectors are shaped for preventing removal of the seat back from the seat when the seat back is in the first position and allowing removal of the seat back from the seat when the seat back is in the second position.

3. A seat according to claim 1 or 2, wherein the securing means is for preventing pivotal movement of the seat back relative to the frame or the seat base, and/or
wherein the securing means comprises a recline mechanism, and/or
wherein the first and second connectors are for engagement with one or more mating parts on the frame or seat base, and/or
wherein the first and second connectors each comprise a first mating part for engagement with a second mating part on the frame or seat base, optionally
wherein (i) the first mating part is a female mating part and the second mating part is a male mating part, or (ii) the first mating part is a male mating part and the second mating part is a female mating part, optionally wherein the female mating parts comprise one or more channels for engagement with a male mating part, and/or wherein the male mating parts each comprise one or more bars or protrusions for engagement with a female mating part, and/or wherein the female mating parts each comprise an insert for positioning within the seat back, seat base or frame, optionally wherein the inserts are positioned within recesses in the seat back, seat base or the frame, and/or
wherein the first and/or second mating parts comprise a retainer for preventing disengagement of the first and second mating parts.

4. A seat according to claim 3, wherein the one or more channels comprise an L-shaped channel.

5. A seat according to claim 3 or 4, wherein the female mating part comprises a bearing insert for rotatable engagement with a male mating part, and/or wherein the female part comprises a bearing block.

6. A seat according to any of claims 3 to 5, wherein one or more of the mating parts are shaped for preventing disengagement thereof from another mating part in a lateral direction when the mating parts are connected.

7. A seat according to any of claims 3 to 6, wherein the male parts are tapered from a first diameter to a reduced diameter adjacent an engaging part for engagement with a female part.

8. A seat according to any of claims 3 to 7, wherein the seat, preferably the frame, comprises a mating part for engagement with two seat backs positioned side by side.

9. A seat according to any preceding claim, wherein the securing means comprises a third connector for connection to the frame, seat base or a recline mechanism, and/or
wherein the securing means is a releasable securing means, and/or
wherein the securing means is provided toward or at the base of the seat back.

10. A seat according to any preceding claim, wherein the securing means is centrally positioned on the seat back.

11. A seat according to any preceding claim, wherein the width of the seat back tapers from a first width between the first and second connectors towards a second width at the securing means.

12. A seat according to any preceding claim, wherein the seat is a vehicle seat, preferably an aircraft seat.

13. A seat back as described in any preceding claim, optionally comprising first, second and third connectors for connecting the seat back to a seat, wherein the first and second connectors are for securing the seat back in pivotable engagement with a seat and the third connector forms part of a securing means for controlling pivotable movement of the seat back and for preventing disengagement of the first and second connectors from a seat when connected thereto.

14. A row of seats comprising a plurality of seats according to any of claims 1 to 12.

15. A female mating part as described in any of claims 3 to 6.
